# EUROPEAN PATENT SPECIFICATION

(11) **EP 4 489 172 B1**
(45) Date of publication and mention of the grant of the patent: **28.10.2026**
(21) Application number: 23816345.5
(22) Date of filing: 31.05.2023
(51) Int. Cl.: H01M 10/058, H01M 4/1391, H01M 4/04, H01M 10/0569, H01M 10/052, H01M 4/02, H01M 50/403, H01M 50/46, H01M 50/489, H01M 50/414, H01M 4/139, H01M 10/0566, H01M 10/42, H01M 50/446

(54) **ELECTRODE ASSEMBLY AND LITHIUM SECONDARY BATTERY COMPRISING SAME**
ELEKTRODENANORDNUNG UND LITHIUMSEKUNDÄRBATTERIE DAMIT
ENSEMBLE ÉLECTRODE ET BATTERIE SECONDAIRE AU LITHIUM LE COMPRENANT

(30) Priority: 02.06.2022 KR 20220067846; 30.05.2023 KR 20230069510
(43) Date of publication of application: 08.01.2025
(60) Divisional application: 26207295.2
(73) Proprietor: LG Energy Solution, Ltd., Seoul 07335 (KR)
(72) Inventor: YOON, Jong Keon, Daejeon 34122 (KR); KIM, Minkyung, Daejeon 34122 (KR); KIM, Hyosik, Daejeon 34122 (KR); JUN, Youngjin, Daejeon 34122 (KR); JUNG, Hyeri, Daejeon 34122 (KR); SOON, Jiyong, Daejeon 34122 (KR); KANG, Sungjoong, Daejeon 34122 (KR); KIM, Dong Kyu, Daejeon 34122 (KR)
(74) Representative: Goddar, Heinz J.
(86) International application number: PCT/KR2023/007404
(87) International publication number: WO 2023/234684

(56) References cited:
- EP-A1- 2 894 698
- JP-A- 2009 176 541
- JP-A- 2013 054 892
- JP-A- 2014 026 806
- KR-A- 20210 104 548
- KR-A- 20210 134 013
- US-A1- 2005 266 150
- US-A1- 2020 321 585

## Description

### [TECHNICAL FIELD]

The present invention relates to an electrode assembly and a lithium secondary battery including the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

Lithium secondary batteries are generally configured to include a positive electrode, a negative electrode, a separator, and an electrolyte, and are known in the relevant technical field to include a positive electrode capable of generating oxygen due to an unstable structure in a charged state. Since the danger of ignition is great when oxygen is generated in this way, attempts have been made to research and develop methods for enhancing the safety of lithium secondary batteries. US 2020/321585 A1 discloses method of manufacturing an electrode assembly.

As an example, a typical separator included in an existing lithium secondary battery, such as a polyolefin-based porous separator, can be shrunk at a high temperature state, and a short circuit between a positive electrode and a negative electrode may occur due to the shrinkage of the separator. When such a short circuit occurs, it can interact with the oxygen generated by the unstable positive electrode to thereby further increase the danger of ignition.

In order to reduce the danger of ignition and improve the safety of the lithium secondary battery, the lithium secondary battery including a porous coating layer interposed between the positive electrode and the negative electrode to replace or assist the separator may be considered. Such a porous coating layer can electrically insulate the positive electrode and the negative electrode from each other while enabling ion movement between the positive electrode and the negative electrode.

However, during the process of forming a coating layer on the electrode of the positive electrode or the negative electrode, the medium of the composition for forming the coating layer is impregnated with the positive electrode, which may cause a problem that the electrode active material layer is swollen.In addition, due to the additional formation of the coating layer, it is difficult to achieve an appropriate porosity of the positive electrode active material layer, or problems such as breakage of the active material layer may also occur during the process of forming the coating layer.

Considering these problems, there is still a continuous demand to develop a technology that can satisfactorily form a porous coating layer on an electrode to replace or assist the separator, thereby solving problems in the process for forming the coating layer while improving the safety of a secondary battery.

### [DETAILED DESCRIPTION OF THE INVENTION]

### [Technical Problem]

It is an object of the present invention to provide an electrode assembly that can form a good porous coating layer on a positive electrode active material layer to thereby improve the safety of a secondary battery and also suppress problems such as damage to a positive electrode active material layer during the process of forming the porous coating layer.

It is another object of the present invention to provide a lithium secondary battery with improved safety, comprising the above-mentioned electrode assembly.

### [Technical Solution]

According to an embodiment of the present invention, there is provided an electrode assembly comprising: a positive electrode current collector, a positive electrode active material layer arranged on the positive electrode current collector, a coating layer coated onto the positive electrode active material layer, a mixed layer in which the positive electrode active material layer and the coating layer are mixed, and a negative electrode arranged on the coating layer and including a negative electrode current collector and a negative electrode active material layer, wherein the coating layer and the mixed layer comprise a polymer binder, and polymer particles or ceramic particles having an absolute value of zeta potential of 25 mV or more dispersed on the polymer binder, and the thickness of the mixed layer is less than 15 *µ*m.

According to another embodiment of the present invention, there is provided a lithium secondary battery comprising: a battery case, a flame retardant electrolyte containing a flame retardant solvent having a flash point of 100°C or more or having no flash point, and a lithium salt, and the electrode assembly.

Further embodiments are disclosed in the dependent claims.

### [Advantageous Effects]

While optimizing the step of forming a porous coating layer on the positive electrode active material layer to thereby suppress damage to the positive electrode during the formation of the coating layer, a porous coating layer that replaces or assists the existing separator can be satisfactorily formed on the positive electrode active material layer, thereby achieving appropriate porosity and mechanical properties of the positive electrode active material layer and the porous coating layer.

As a result, it is possible to greatly contribute to the development of a lithium secondary battery having high capacity characteristics, and high energy density, while exhibiting improved safety.

### [BRIEF DESCRIPTION OF THE DRAWINGS]

Fig. 1 is a photograph of a cross section of the positive electrode active material layer and the coating layer of Example 1 observed through a scanning electron microscope (SEM).
Fig. 2 is a photograph of a cross-section of the positive electrode active material layer and the coating layer of Comparative Example 4 observed through a scanning electron microscope (SEM).

### [DETAILED DESCRIPTION OF THE EMBODIMENTS]

Hereinafter, terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

Unless defined otherwise, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the specification, unless explicitly described to the contrary, the word "comprise" and variations such as "comprises" or "comprising" will be understood to imply the inclusion of stated elements but not the exclusion of any other elements.

The term "and/or" as used in a phrase such as "A and/or B" herein is intended to include "A" (alone), or "B" (alone), or "both A and B,".

### Method of manufacturing an electrode assembly

A method of manufacturing an electrode assembly comprises the steps of: (S1) applying a positive electrode slurry onto a positive electrode current collector and drying it to form a positive electrode active material layer; (S2) primarily rolling the positive electrode current collector and the positive electrode active material layer; (S3) applying a coating layer slurry onto the positive electrode active material layer and drying it to form a positive electrode stack including the coating layer; (S4) secondarily rolling the positive electrode stack; and (S5) stacking a negative electrode on the coating layer to manufacture an electrode assembly, wherein the primary rolling step is performed so that a porosity of the positive electrode active material layer is 35% to 45%, and the secondary rolling step is performed so that a porosity of the positive electrode active material layer is 20% to 30%.

In the manufacturing method of the electrode assembly, the coating layer slurry includes, for example, a polymer binder and polymer particles or ceramic particles having an absolute value of zeta potential of 25 mV or more dispersed on the polymer binder, thereby allowing the movement of lithium ions during charging and discharging while electrically insulating the positive electrode and the negative electrode.

In the manufacturing method, when forming a porous coating layer that replaces or assists an existing separator in this way, a positive electrode active material layer and a porous coating layer are formed through a plurality of rolling steps. It was confirmed that through this process, a mixed layer in which a part of the porous coating layer is permeated and mixed with the positive electrode active material layer can be formed with a very thin thickness.

By the formation of such a thin porous coating layer, short circuit or ignition between electrodes due to thermal shrinkage of the separator can be suppressed, and the energy density of the unit secondary battery can be further increased due to the thin thickness of the porous coating layer.

Further, while the porosity suitable for the positive electrode active material layer, for example, a porosity of 20% to 30%, is finally achieved by the progress of the plurality of rolling steps, and damage to the positive electrode active material layer due to a higher pressure in the rolling step for forming the coating layer can be suppressed. Additionally, due to the plurality of rolling steps, the problem that the liquid medium of the coating layer slurry swells the positive electrode active material layer can also be reduced.

On the other hand, each configuration of the electrode assembly will be specifically described below in the description section of the electrode assembly, and each step of the manufacturing method will be described below.

First, a positive electrode slurry is applied onto a positive electrode current collector and dried to form a positive electrode active material layer (S1).

The positive electrode slurry can be prepared by dissolving or dispersing a positive electrode active material, a binder, a conductive material, and an optional dispersant in a solvent.

Such a positive electrode slurry can be applied onto a positive electrode current collector and dried to form a positive electrode active material layer. For example, a positive electrode slurry is applied onto a positive electrode current collector, and allowed to pass through a drying area equipped with an exhaust fan at a constant speed in a continuous process to thereby dry the positive electrode current collector and the positive electrode slurry.The drying area may be divided into six areas with a length of about 2 m, and the temperature in each drying area may be about 50 to 95°C.

Then, the positive electrode current collector and the positive electrode active material layer are primarily rolled (S2).

Such a primary rolling step and a secondary rolling step described below can be performed, for example, by using rolling rolls, and the gap between the rolling rolls can be appropriately set to control the thickness and/or porosity of the positive electrode current collector and the positive electrode active material layer.

Through the primary rolling step, the thickness and/or porosity of the positive electrode current collector and the positive electrode active material layer can be changed within an appropriate range.

After the primary rolling, the total thicknesses of the positive electrode current collector and the positive electrode active material layer that have been primarily rolled is 80% to 90%, or 83% to 87% of the total thicknesses of the positive electrode current collector and the positive electrode active material layer which were not rolled before the primary rolling.

When the thickness ratio after the primary rolling is less than 80% of the initial thickness, the positive electrode current collector and the positive electrode active material layer are excessively rolled, which may cause damage, for **example,** the positive electrode active material layer swells on the positive electrode current collector.On the contrary, when the thickness ratio after the primary rolling exceeds 90% of the initial thickness,the positive electrode current collector and the positive electrode active material layer are not substantially rolled, so that in subsequent steps, the liquid medium of the coating layer slurry can permeate into the positive electrode active material layer, and swelling may occur.

In a specific example, in the initial state in which the primary rolling is not performed, the total thicknesses of the positive electrode current collector and the positive electrode active material layer may be 150 to 200 *µ*m, or 160 to 180 *µ*m, and the total thicknesses of the positive electrode current collector and the positive electrode active material layer that have been primarily rolled may be 120 to 180 *µ*m or 130 to 170 *µ*m.

Further, the first rolling step can be performed by passing the positive electrode current collector and the positive electrode active material layer between the rolling rolls, so that the porosity of the positive electrode active material layer is 35% to 45%, or 37% to 43%.

At this time, the porosity (P, unit: %) of the positive electrode active material layer can be calculated by a method commonly used in the relevant technical field, and specifically, the porosity can be calculated according to the following Equation 1. [Equation 1] $P = \left(1-D\right) / T \times 100$

In Equation 1, D is the density of the positive electrode active material layer, T is the true density of the positive electrode active material excluding the current collector in the positive electrode. The true density means the intrinsic density of the positive electrode active material without pores.

Further, the density D of the positive electrode active material layer may be calculated according to the following Equation 2. [Equation 2] $D = M / \left(S\times H\right)$

In Equation 2, M is the mass of the positive electrode active material layer,S is the area of the positive electrode active material layer, and H is the thickness of the positive electrode active material layer.

When the porosity of the positive electrode active material layer after the primary rolling is less than 35%, the positive electrode current collector and the positive electrode active material layer are excessively rolled, which may cause damage, for example, the positive electrode active material layer swells on the positive electrode current collector. On the contrary, when the porosity of the positive electrode active material layer after the primary rolling exceeds 45%,the positive electrode current collector and the positive electrode active material layer are not substantially rolled, so that in subsequent steps, the liquid medium of the coating layer slurry can permeate into the positive electrode active material layer, and swelling may occur. Further, due to the permeation of the liquid medium contained in the coating layer slurry, the porosity of the positive electrode active material layer may be increased and non-uniform pores may be formed.

Then, a coating layer slurry is applied onto the positive electrode active material layer and dried to form a positive electrode stack including a coating layer (S3).

The coating layer slurry may be, for example, a slurry composition including a polymer binder, polymer particles or ceramic particles having an absolute value of zeta potential of 25 mV or more, and a liquid medium, and can be for forming a porous coating layer (including a mixed layer) on the positive electrode active material layer.

At this time, the zeta potential of the polymer particles or ceramic particles is a physical property that reflects the surface polarity of these particles and defines the electrostatic repulsive force or dispersibility between particles. The polymer particles or ceramic particles having a large absolute value of the zeta potential can be uniformly dispersed on the positive electrode active material layer to exhibit satisfactory and uniform coating properties, and a large number of fine and uniform pores that allow lithium ions to pass between these particles can be defined. In addition, due to the particles satisfying such a zeta potential, the porous coating layer may exhibit excellent impregnation property for a flame retardant electrolyte containing a flame retardant solvent. A combination of the porous coating layer and the flame retardant electrolyte allows the lithium secondary battery to exhibit superior safety.

The zeta potential of the polymer particles or ceramic particles can be measured, for example, by an electrophoretic light scattering method using a dynamic light scattering device. At this time, the zeta potential of the polymer particles or ceramic particles can be measured in a state where the particles are dispersed in water or an alcohol-based solvent without a separate dispersant. In a specific example, the zeta potential can be measured in a state in which the polymer particles or ceramic particles are dispersed at a concentration of 0.1wt.% or less in a water solvent.

The absolute value of the zeta potential of the polymer particles or ceramic particles may be 25 mV or more, or 35 mV or more, or 45 mV or more, and 100 mV or less, or 90 mV or less, or 80 mV or less. Within this range, satisfactory coating properties of the coating layer slurry can be achieved, and high impregnation properties of the flame retardant electrolyte can be secured.

Specific examples of the polymer particles include at least one selected from the group consisting of polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, polyethylene terephthalate, and polyphenylene sulfide.

In addition, specific examples of the ceramic particle include at least one selected from the group consisting of boehmite, aluminum oxide, titanium oxide, iron oxide, silicon oxide, zirconium oxide, cobalt oxide, tin oxide, nickel oxide, zinc oxide, vanadium oxide, and manganese oxide.

The zeta potential of the polymer particles or ceramic particles can be controlled not only by the type of each particle, but also by the particle size or surface properties of these particles. Thus, in order to achieve the zeta potential of the polymer particles or ceramic particles, the appropriate porosity of the dispersive or porous coating layer, the polymer particles or ceramic particles may have a particle size of 50 nm to 3 *µ*m, 50 nm to 1.5 *µ*m, or 100 nm to 1 *µ*m.

In addition, in order to control the surface properties of the polymer particles or ceramic particles and thereby adjust the zeta potential, the polymer particles or ceramic particles may be included in the coating layer slurry in a state of being surface-treated with oxygen plasma or ion beam.

On the other hand, in the above-mentioned coating layer slurry, the polymer binder used herein may be a polymer of the same type as the binder included in the positive electrode active material layer, and specific examples thereof may include polyvinylidene fluoride, polyvinyl alcohol, carboxymethylcellulose (CMC), starch, hydroxypropyl cellulose, regenerated cellulose, polyvinylpyrrolidone, polytetrafluoroethylene, polyethylene (PE), polypropylene, ethylene-propylene-diene monomer, sulfonated ethylene-propylene-diene monomer, nitrile-based rubber, styrene-butadiene rubber, or fluororubber, and a mixture or copolymer of two or more selected from these polymers can also be used. However, the specific composition of the polymer binder can be obviously determined by those skilled in the art in consideration of the type and characteristics of the polymeric particles or ceramic particles, and the method of forming the coating layer.

Moreover, considering the excellent coating properties of the above-mentioned coating layer slurry and the excellent dispersibility of the particles, the coating layer slurry may include the polymer binder and the polymer particles or ceramic particles in a weight ratio of 5:95 to 40:60, or 10:90 to 35:65.

And, the coating layer slurry may further comprise a dispersant, and such a dispersant may comprise, for example, at least one of hydrogenated nitrile rubber (H-NBR) and tannic acid.

Additionally, the coating layer slurry further comprises a liquid medium for dispersing each component described above. Such a medium may include organic solvents such as N-methyl-2-pyrrolidone (NMP) or acetone, or water, and can be appropriately selected in consideration of the types of the above-mentioned polymer particles, ceramic particles, or polymer binders.

The above-mentioned coating layer slurry may be applied onto the primarily rolled positive electrode active material layer and dried to form a porous coating layer on the positive electrode active material layer, and the resulting product may be defined as a positive electrode stack.

On the other hand, after the formation of the porous coating layer, the positive electrode stack is secondarily rolled (S4). Such a secondary rolling step may be performed by properly setting the gap between the rolling rolls in the same way as the primary rolling step, and the thickness and/or porosity of the positive electrode active material layer and the porous coating layer can be appropriately achieved through the secondary rolling step.

After the secondary rolling, the total thicknesses of the secondary rolled positive electrode current collector and positive electrode active material layer may be 60% to 75%,or 63% to 72% of the total thicknesses of the positive electrode current collector and positive electrode active material layer that were not rolled before the primary rolling. At this time, the thickness of the secondarily rolled positive electrode active material layer may be calculated in consideration of the thickness of the mixed layer in which the porous coating layer is mixed, and the thickness of each layer can be confirmed through electron microscopic analysis.

When the thickness ratio after the secondary rolling is less than 60% of the initial thickness, the positive electrode stack is excessively rolled, and the thickness of the porous coating layer becomes too thin, so that the positive electrode and the negative electrode are easily short-circuited, or the positive electrode active material layer may be damaged. On the contrary, when the thickness ratio after the secondary rolling exceeds 75% of the initial thickness, the positive electrode active material layer fails to have an appropriate porosity, and battery characteristics may deteriorate.

In addition, the second rolling step may be performed by passing the positive electrode stack between the rolling rolls, so that the porosity of the positive electrode active material layer is 20% to 30%, or 22% to 28%.

When the porosity of the positive electrode active material layer after the secondary rolling is less than 20%, the positive electrode stack is excessively rolled, and the thickness of the porous coating layer becomes too thin, so that the positive electrode and the negative electrode may be easily short-circuited, or the positive electrode active material layer may be damaged.On the contrary, when the porosity of the positive electrode active material layer after the secondary rolling exceeds 30%,the positive electrode active material layer fails to have an appropriate porosity, and the capacity characteristics of the battery may deteriorate.

Then, a negative electrode is stacked on the porous coating layer to manufacture an electrode assembly (S5).

As will be described later, the negative electrode may comprise a negative electrode current collector and a negative electrode active material layer. Further, in the step of manufacturing an electrode assembly, the negative electrode is stacked on the porous coating layer in a state where the porous coating layer is formed on the upper surface of the secondarily rolled positive electrode stack, thereby manufacturing an electrode assembly.

An embodiment of an electrode assembly that can be manufactured by the method will be described in detail below.

### Electrode Assembly

An electrode assembly according to an embodiment of the invention comprises a positive electrode current collector; a positive electrode active material layer arranged on the positive electrode current collector; a coating layer coated onto the positive electrode active material layer; a mixed layer in which the positive electrode active material layer and the coating layer are mixed; and **a negative** electrode arranged on the coating layer and including a negative electrode current collector and a negative electrode active material layer, wherein the coating layer and the mixed layer comprise a polymer binder, and polymer particles or ceramic particles having an absolute value of zeta potential of 25 mV or more dispersed on the polymer binder, and the thickness of the mixed layer is less than 15 *µ*m.

The coating layer includes, for example, a plurality of pores having a diameter of 10 nm or more, and also may be formed of a porous coating layer having a porosity comparable to that of the positive electrode active material layer. Such a porous coating layer electrically insulates the positive electrode and the negative electrode, and also enables the movement of lithium ions during charging and discharging, thereby replacing or assisting the existing separator.

In the electrode assembly of other embodiments, since such a porous coating layer is formed, a short circuit or ignition between electrodes due to thermal shrinkage of the existing separator can be suppressed, and a lithium secondary battery having more improved safety can be provided. Further, since the porous coating layer may have a smaller thickness due to the formation of the mixed layer to a minimum, the energy density of the unit secondary battery can be further increased.

In the electrode assembly of the other embodiments, the thickness of the mixed layer may be 0 *µ*m or more, and 15 *µ*m or less, or 0.1 *µ*m or more and 10 *µ*m or less, or 1 *µ*m or more and 5 *µ*m or less, specifically, 5 *µ*m to 14 *µ*m, or 7 *µ*m to 12 *µ*m.The thickness of the mixed layer can be adjusted by controlling the degree of primary rolling mentioned above.

Specifically, the primary rolling is performed so that the total thickness of the positive electrode current collector and the positive electrode active material layer that have been primarily rolled is 80% to 90% of the total thicknesses of the positive electrode current collector and the positive electrode active material layer that have not been rolled, so that the minimum thickness of the mixed layer mentioned above can be achieved. Further, as the primary rolling step is performed so that the porosity of the positive electrode active material layer is 35% to 45%, the minimum thickness of the mixed layer mentioned above can be achieved during the secondary rolling.

As the thickness of the mixed layer satisfies the above numerical range, the thickness of the porous coating layer replacing or assisting the separator can be reduced, and the coating properties of the positive electrode active material layer can be improved. Further, by controlling the thickness of the porous coating layer, the porosity and electrical properties of the positive electrode active material layer can be adjusted within desired ranges.

Meanwhile, since the composition of the mixed layer and the porous coating layer are the same as those described for the manufacturing method, additional descriptions thereof will be omitted below.

Further, in the electrode assembly, the positive electrode current collector is not particularly limited as long as it has conductivity without causing a chemical change in the battery. For example, the current collector may be formed of stainless steel, aluminum, nickel, titanium, or calcinated carbon, or aluminum or stainless steel that is surface-treated with carbon, nickel, titanium, or silver. Such a positive electrode current collector may have a thickness of 3 *µ*m to 500 *µ*m, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

In addition, the positive electrode active material layer on the positive electrode current collector may include a positive electrode active material, and may optionally further include a conductive material, and a binder.

The positive electrode active material may be a material capable of reversibly intercalating and deintercalating lithium, wherein the positive electrode active material may particularly include a lithium metal oxide containing lithium and at least one metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNii_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1)), lithium-manganese-cobalt-based oxide (e.g., LiCo_{1-Y2}Mn_{Y2}O₂ (where 0<Y2<1), LiMn_{2-Z1}CO_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), and any one thereof or a compound of two or more thereof may be used.

Among these materials, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂,Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), and any one thereof or a mixture of two or more thereof may be used.

The positive electrode active material may be included in an amount of 60 to 99wt.%, 70 to 99wt.%, or 80 to 98wt.% based on the total weight of the positive electrode active material layer.

The conductive material is a component that further improves the conductivity of the positive electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder;conductive powder such as aluminum powder, and nickel powder; conductive whiskers such as zinc oxide whiskers and potassium titanate whiskers; conductive metal oxide such as titanium oxide; or polyphenylene derivatives, may be used.

Typically, the conductive material may be included in an amount of 1 to 20wt.%, 1 to 15wt.%, or 1 to 10wt.% based on the total weight of the positive electrode active material layer.

Meanwhile, the binder is a component that assists in the binding between the active material and the conductive material and in the binding with the positive electrode current collector.

Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, and various copolymers.

Typically, the binder may be included in an amount of 1 to 20wt.%, 1 to 15wt.%, or 1 to 10wt.% based on the total weight of the positive electrode active material layer.

Meanwhile, the negative electrode may include a negative electrode current collector and a negative electrode active material layer.

The negative electrode current collector is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, or silver, or an aluminum-cadmium alloy may be used.

The negative electrode collector may generally have a thickness of 3 *µ*m to 500 *µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

Furthermore, the negative electrode active material layer may include a negative electrode active material, and may optionally further include a conductive material, and a binder.

The negative electrode active material may comprise at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0<x≤1), LiₓWO₂(0<x≤1), and SnₓMe₁₋ₓMe'_{y}O_{z} (Me: Mn, Fe, Pb, Ge; Me': Al, B, P, Si, Groups I, II and III elements of the periodic table, or halogen; 0<x<1; 1≤y≤3; 1≤z≤8) can be used as the metal composite oxide.

The material, which may be doped and undoped with lithium, may comprise Si, SiOₓ(O<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may comprise lithium-containing titanium composite oxide (LTO), vanadium oxide, and lithium vanadium oxide.

The negative electrode active material may be included in an amount of 60 to 99wt.%,or 70 to 99wt.%, or 80 to 98wt.% based on a total weight of the negative electrode active material layer.

On the other hand, the types of binders and conductive materials that can be contained in the negative electrode active material layer, and the contents of these materials are substantially the same as those described for the positive electrode active material layer, additional descriptions thereof will be omitted below.

### Lithium Secondary Battery

According to a further embodiment of the invention, there is provided a lithium secondary battery comprising: a battery case, a flame retardant electrolyte containing a flame retardant solvent having a flash point of 100 °C or more or having no flash point, and a lithium salt, and the above-mentioned electrode assembly.

Such a lithium secondary battery includes a flame retardant electrolyte including a flame retardant solvent along with an electrode assembly including the porous coating layer mentioned above. As already described above, the porous coating layer includes polymer particles or ceramic particles having predetermined characteristics, and thereby can exhibit excellent impregnation properties for flame retardant solvents and electrolytes. Therefore, the combination of the porous coating layer and the flame retardant electrolyte more effectively suppresses ignition due to short-circuiting between electrodes, so that the safety of the lithium secondary battery can be further improved, and excellent electrical properties can be achieved.

Such flame retardant solvents are solvents with low volatility and combustibility, which can be defined through a predetermined flash point. For example, the flame retardant solvent may encompass a substantially non-flammable organic solvent having no flash point, and an organic solvent having a high flash point of 100°C or more, or 100 to 250°C, or 110 to 200°C, and low volatility. The lithium secondary battery comprises a flame retardant electrolyte including such a flame retardant solvent and a lithium salt and thereby can exhibit excellent safety and stability. Moreover, since the flame retardant electrolyte can be uniformly impregnated into the above porous coating layer, excellent electrochemical characteristics of the lithium secondary battery can be achieved. The flash point defining the flame retardant solvent can be measured using either a closed tester or open tester according to the standard methods of ASTM D93 or ASTM D1310.

In specific examples, the flame retardant solvent may be an organic solvent having a functional group selected from the group consisting of a functional group that can contribute to low volatility and flame retardancy or non-flammability of organic solvents, for example, sulfone-based functional groups and fluorine-containing functional groups such as fluorine-substituted hydrocarbon groups, and phosphorus-containing functional groups such as phosphate groups or phosphonate groups, and nitrile-based functional groups. More specifically, the flame retardant solvent may include at least one organic solvent selected from the group consisting of a sulfone-based compound, a nitrile-based compound, a phosphoric acid-based compound and a fluorine-substituted carbonate-based compound.

Among them, the sulfone-based compound may comprise at least one selected from the group consisting of a cyclic sulfone-based compound or a linear sulfone-based compound, and specifically, the sulfone-based compound may include at least one selected from the group consisting of sulfolane, ethylmethyl sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

Further, the nitrile-based compound may comprise at least one selected from the group consisting of malononitrile, succinonitrile, glutaronitrile, adiponitrile, suberonitrile, and sebaconitrile.

Further, the phosphoric acid-based compound may comprise at least one selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

Further, the fluorine-substituted carbonate-based compound may comprise at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoropropyl)carbonate.

Meanwhile, the lithium salt included in the flame retardant electrolyte is used as a medium for transferring ions in a lithium secondary battery. The lithium salt may include, for example, Li⁺ as a cation, and may comprise at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may comprise at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), but it is preferable to include LiN(SO₂CF₃)₂ in consideration of excellent stability. In addition to these, the lithium salt commonly used in an electrolyte of a lithium secondary battery can be used without particular limitation.

The concentration of the lithium salt can be changed as appropriate within a generally usable range, but the lithium salt may be included in the flame retardant electrolyte at a concentration of 0.5M to 6M, 1M to 3M, or 1M to 2.5M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

Furthermore, the above-mentioned flame retardant electrolyte can prevent the electrolyte from decomposing in a high-power environment and causing a negative electrode collapse, or may optionally further include an electrolyte additive, considering low-temperature high-rate discharge characteristics, high-temperature stability, overcharge prevention, or battery expansion suppression effect at high temperatures.

A representative example of such an electrolyte additive includes at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt compound.

Among them, the cyclic carbonate-based compound may include vinylene carbonate (VC) or vinyl ethylene carbonate. Also, the halogen-substituted carbonate-based compound may include fluoroethylene carbonate (FEC). Further, the sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone. The sulfate-based compound may include ethylene sulfate (Esa), trimethylene sulfate (TMS), or methyl trimethylene sulfate (MTMS), and the phosphate-based compound may include at least one compound selected from the group consisting of lithium difluoro bis(oxalato)phosphate, lithium difluorophosphate, tetramethyl trimethylsilyl phosphate, and tris(2,2,2-trifluoroethyl)phosphate.

The borate-based compound may include tetraphenylborate, lithium oxalyldifluoroborate (LiODFB), or lithium bis(oxalato)borate(LiB(C₂O₄)₂, LiBOB), and the nitrile-based compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile. In addition, the benzene-based compound may include fluorobenzene, the amine-based compound may include triethanolamine, or ethylenediamine, and the silane-based compound may include tetravinylsilane. Further, the lithium salt-based compound is a compound different from the lithium salt included in the flame retardant electrolyte, wherein the lithium salt-based compound may include lithium nitrate, lithium difluorophosphate (LiDFP), LiPO₂F₂, or LiBF₄.

The above-mentioned electrolyte additive is included in an amount of 0.1 to 10wt.%, or 0.2 to 8wt.%, or 0.5 to 8wt.% based on the total weight of the flame retardant electrolyte, and thereby can contribute to the improvement of ionic conductivity or cycle characteristics.

The above-mentioned lithium secondary battery can be formed by housing the electrode assembly in a case and injecting and impregnating the flame retardant electrolyte therein, and the lithium secondary battery may be cylindrical type, prismatic type, pouch type or coin type battery depending on the shape of the case. At this time, the battery case may be one commonly used in the art, and there is no limit to the outer shape according to the purpose of the battery. For example, the battery case may be a cylindrical type, a prismatic type, a pouch type, or a coin type, but is not limited thereto.

The above-mentioned lithium secondary battery can be manufactured by inserting the electrode assembly into an appropriate battery case and then injecting a flame retardant electrolyte therein. Alternatively, the lithium secondary battery can also be manufactured by stacking the electrode assemblies, then impregnating them with a flame retardant electrolyte, putting the resulting product into a battery case and sealing the case.

The above-mentioned lithium secondary battery can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system (ESS).

Hereinafter, the invention will be described in more detail with reference to specific examples. However, the following examples are only for facilitating understanding of the invention, and are not intended to limit the scope of the invention.

### <Example and Comparative Example>

First, in the following examples, the zeta potential of polymer particles or ceramic particles was measured by an electrophoretic light scattering method using a dynamic light scattering device (product name: ELS-Z), in a state in which the polymer particles or ceramic particles were dispersed at a concentration of 0.1 wt.% or less in a water solvent at a temperature of 25°C.

### Example 1

S1: Li(Ni_{0.8}Mn_{0.1}Co_{0.1})O₂ was used as a positive electrode active material, and a positive electrode slurry containing such a positive electrode active material was applied onto an aluminum current collector and dried to form a positive **electrode** active material layer. The sum of a thickness of the current collector and a thickness of the positive electrode active material layer was 176 *µ*m.

S2: Primary rolling was performed using a pilot rolling machine so that the sum of the thickness of the current collector and the thickness of the positive electrode active material layer was 150 *µ*m, and the porosity of the positive electrode active material layer was 40%. At this time, the porosity of the positive electrode active material layer was calculated from the true density of the positive electrode active material, and the mass, area and thickness of the positive electrode active material layer according to Equations 1 and 2.

S3: A coating layer slurry was applied onto the primarily rolled positive electrode active material layer.

Polymethyl methacrylate (PMMA) polymer particles having a zeta potential of -50 mV and a particle size of 1 *µ*m was put and dispersed in N-methyl-2-pyrrolidone (NMP) solvent so that the mass ratio of PMMA: hydrogenated nitrile rubber (H-NBR): polyvinylidene fluoride (PVDF) was 7: 1: 2, thereby preparing the coating layer slurry (solid content: 21 wt.%).

The coating layer slurry was dried to form a positive electrode stack including the coating layer.

S4: The positive electrode stack was secondarily rolled using a pilot rolling machine. Secondary rolling was performed so that the porosity of the positive electrode active material layer was 26%, and after the secondary rolling, the sum of the thickness of the positive electrode current collector and the thickness of the positive electrode active material layer was 125 *µ*m.

S5: A negative electrode was stacked on the coating layer to manufacture an electrode assembly.

As the negative electrode, one containing a copper current collector and graphite as a negative electrode active material was used.

### Comparative Example 1

S1: This was performed in the same manner as in Example 1.

S2: This was performed in the same manner as in Example 1, except that primary rolling was performed so that the porosity of the positive electrode active material layer was 26%, and after the primary rolling, the sum of the thickness of the current collector and the thickness of the positive electrode active material layer was 125 *µ*m.

S3: This was performed in the same manner as in Example 1.

S4: Secondary rolling was not performed.

S5: This was performed in the same manner as in Example 1.

### Comparative Example 2

S1: This was performed in the same manner as in Example 1.

S2: This was performed in the same manner as in Example 1, except that primary rolling was performed so that the porosity of the positive electrode active material layer was 30%, and after the primary rolling, the sum of the thickness of the current collector and the thickness of the positive electrode active material layer was 132 *µ*m.

S3: This was performed in the same manner as in Example 1.

S4: This was performed in the same manner as in Example 1, except that secondary rolling was performed so that the porosity of the positive electrode active material layer was 26%, and after the primary rolling, the sum of the thickness of the positive electrode current collector and the thickness of the positive electrode active material layer was 125 *µ*m.

S5: This was performed in the same manner as in Example 1.

### Comparative Example 3

S1: This was performed in the same manner as in Example 1.

S2: This was performed in the same manner as in Example 1, except that primary rolling was performed so that the porosity of the positive electrode active material layer was 48%, and after the primary rolling, the sum of the thickness of the current collector and the thickness of the positive electrode active material layer was 173 *µ*m.

S3: This was performed in the same manner as in Example 1.

S4: This was performed in the same manner as in Example 1, except that secondary rolling was performed so that the porosity of the positive electrode active material layer was 26%, and after the primary rolling, the sum of the thickness of the positive electrode current collector and the thickness of the positive electrode active material layer was 125 *µ*m.

S5: This was performed in the same manner as in Example 1.

### Comparative Example 4

S1: This was performed in the same manner as in Example 1.

S2: Primary rolling was not performed.

S3: This was performed in the same manner as in Example 1.

S4: This was performed in the same manner as in Example 1, except that secondary rolling was performed so that the porosity of the positive electrode active material layer was 26%, and after the secondary rolling, the sum of the thickness of the positive electrode current collector and the thickness of the positive electrode active material layer was 125 *µ*m.

S5: This was performed in the same manner as in Example 1.

### <Experimental Example 1>

### Confirmation of the damage to the electrode assembly

Damage to the electrode assemblies manufactured in Example 1 and Comparative Examples 1 to 4 was visually confirmed, and judged as follows. The measurement results are shown in Table 1 below.

In order to confirm whether the electrode assembly was damaged, after the primary rolling in step (S2), it was visually judged whether a swell occurred at the boundary between the area where the positive active material layer of the electrode assembly was formed and the current collector area where the positive active material layer was not formed, and if a swell occurs, it was judged that the electrode assembly was damaged.

In addition, whether a crack occurred on the surface of the coating layer was visually judged, and if a crack occurred, it was judged that the electrode assembly was damaged.

O: A swell was observed on the current collector, or a crack was observed on the surface of the coating layer.

X: No swell was observed on the current collector, and no crack was observed on the surface of the coating layer.

**[Table 1]**

| | Damage to the electrode assembly |
|---|---|
| Example 1 | X |
| Comparative Example 1 | O |
| Comparative Example 2 | O |
| Comparative Example 3 | O |
| Comparative Example 4 | O |

In the case of Example 1, after the first rolling in step (S2), no swell occurred at the boundary between the area where the positive electrode active material layer was formed and the current collector area where the positive electrode active material layer was not formed, and no cracks were found in the coating layer.

In the case of Comparative Example 1 and Comparative Example 2, after the first rolling in step (S2), a swell occurred at the boundary between the area where the positive electrode active material layer was formed and the current collector area where the positive electrode active material layer was not formed.

In the case of Comparative Example 3, no swell was found in step (S2), but in step (S3), when the coating layer slurry was applied onto the primarily rolled positive electrode active material layer, the organic solvent of the coating layer slurry was permeated into the positive electrode active material layer. Accordingly, the positive electrode active material layer was easily detached from the electrode assembly, and cracks were found on the surface of the dried coating layer.

In the case of Comparative Example 4, no swell was observed in step (S2), but when the coating layer slurry was applied onto the positive electrode active material layer in step (S3), the organic solvent of the coating layer slurry was permeated into the positive electrode active material layer. Accordingly, the positive electrode active material layer was easily detached from the electrode assembly, and cracks were found on the surface of the dried coating layer.

### <Experimental Example 2>

### Confirmation of the thickness of the mixed layer of the electrode assembly

In regard to Example 1 and Comparative Example 4, the thickness of the mixed layer was confirmed by photographs of cross sections of each positive electrode and coating layer using a scanning electron microscope (SEM).

The thickness of the mixed layer was defined as the maximum depth of the coating layer that permeated into the positive electrode active material layer from the point of being the boundary between the positive electrode active material layer and the coating layer in the photograph of the crosssection of the positive electrode and the coating layer.

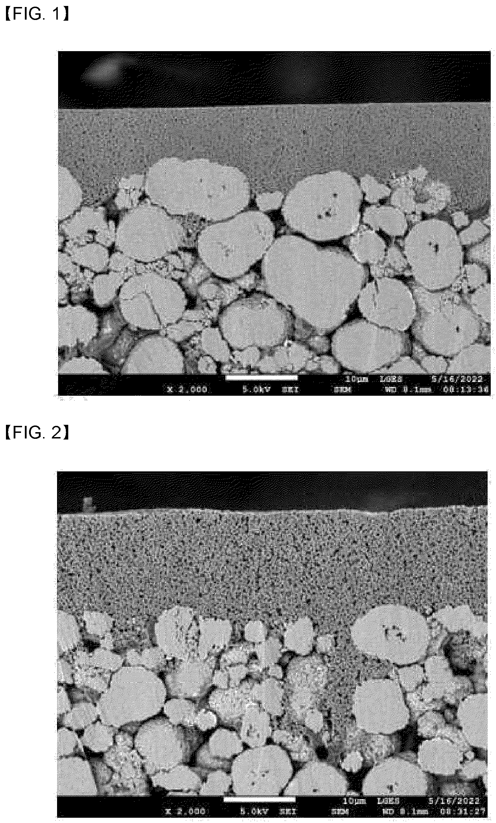

SEM photographs of Example 1 and Comparative Example 4 are shown in Figs. 1 and 2, respectively, and the measured thicknesses of the mixed layers of Example 1 and Comparative Example 4 are shown in Table 2 below.

**[Table 2]**

| | Thickness of mixed layer (unit: *µ*m) |
|---|---|
| Example 1 | ~0.1 |
| Comparative Example 4 | 15 |

In Example 1, primary rolling was performed so that the positive electrode active material layer had an appropriate porosity, unlike Comparative Example 4, and it was confirmed that in Example 1, the mixed layer in which the positive electrode active material layer and the coating layer were mixed existed only with a very thin thickness.

## Claims

1. An electrode assembly comprising:
a positive electrode current collector;
a positive electrode active material layer arranged on the positive electrode current collector;
a coating layer coated onto the positive electrode active material layer;
a mixed layer in which the positive electrode active material layer and the coating layer are mixed; and
a negative electrode arranged on the coating layer and including a negative electrode current collector and a negative electrode active material layer,
wherein the coating layer and the mixed layer comprise a polymer binder, and polymer particles or ceramic particles having an absolute value of zeta potential of 25 mV or more dispersed on the polymer binder, and the thickness of the mixed layer is less than 15 *µ*m, wherein the zeta potential is measured by an electrophoretic light scattering method using a dynamic light scattering device as disclosed in the specification.

2. The electrode assembly according to claim 1, wherein
the thickness of the mixed layer is 0.1 *µ*m to 14 *µ*m, and the total thicknesses of the mixed layer and the coating layer is 5 *µ*m to 50 *µ*m.

3. The electrode assembly according to claim 1, wherein:
the coating layer and the mixed layer comprise the polymer binder and the polymer particles or ceramic particles in a weight ratio of 5:95 to 40:60.

4. The electrode assembly according to claim 1, wherein:
the polymer particles comprise at least one selected from the group consisting of polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, polyethylene terephthalate, and polyphenylene sulfide,

5. The electrode assembly according to claim 1, wherein:
the ceramic particles comprise at least one selected from the group consisting of boehmite, aluminum oxide, titanium oxide, iron oxide, silicon oxide, zirconium oxide, cobalt oxide, tin oxide, nickel oxide, zinc oxide, vanadium oxide, and manganese oxide.

6. A lithium secondary battery comprising: a battery case, a flame retardant electrolyte containing a flame retardant solvent having a flash point of 100 °C or more or having no flash point, and a lithium salt, and the electrode assembly as defined in claim 1, wherein the flash point is measured using either a closed tester or open tester according to the standard methods of ASTM D93 or ASTM D1310.

7. The lithium secondary battery according to claim 6, wherein the flame retardant solvent comprises at least one organic solvent selected from the group consisting of a sulfone-based compound, a nitrile-based compound, a phosphoric acid-based compound and a fluorine-substituted carbonate-based compound.

## Patentansprüche

1. Elektrodenanordnung, umfassend:
einen Stromabnehmer einer positiven Elektrode;
eine Positivelektrodenaktivmaterialschicht, die auf dem Stromabnehmer der positiven Elektrode angeordnet ist;
eine Beschichtungsschicht, die auf die Positivelektrodenaktivmaterialschicht beschichtet ist;
eine Mischschicht, in der die Positivelektrodenaktivmaterialschicht und die Beschichtungsschicht gemischt sind; und
eine negative Elektrode, die auf der Beschichtungsschicht angeordnet ist und einen Stromabnehmer der negativen Elektrode und eine Negativelektrodenaktivmaterialschicht umfasst,
wobei die Beschichtungsschicht und die Mischschicht ein Polymerbindemittel und Polymerpartikel oder Keramikpartikel mit einem Absolutwert des Zeta-Potentials von 25 mV oder mehr, die auf dem Polymerbindemittel dispergiert sind, umfassen und die Dicke der Mischschicht weniger als 15 µm beträgt, wobei das Zeta-Potential durch ein elektrophoretisches Lichtstreuverfahren unter Verwendung einer dynamischen Lichtstreuvorrichtung, wie in der Beschreibung offenbart, gemessen wird.

2. Elektrodenanordnung nach Anspruch 1, wobei
die Dicke der Mischschicht 0,1 µm bis 14 µm beträgt und die Gesamtdicken der Mischschicht und der Beschichtungsschicht 5 µm bis 50 µm betragen.

3. Elektrodenanordnung nach Anspruch 1, wobei:
die Beschichtungsschicht und die Mischschicht das Polymerbindemittel und die Polymerpartikel oder Keramikpartikel in einem Gewichtsverhältnis von 5:95 bis 40:60 umfassen.

4. Elektrodenanordnung nach Anspruch 1, wobei:
die Polymerpartikel mindestens eines, ausgewählt aus der Gruppe, bestehend aus Polymethyl(meth)acrylat, Polystyrol, Polyvinylchlorid, Polycarbonat, Polysulfon, Polyethersulfon, Polyetherimid, Polyphenylsulfon, Polyamidimid, Polyimid, Polybenzimidazol, Polyetherketon, Polyphthalamid, Polybutylenterephthalat, Polyethylenterephthalat und Polyphenylensulfid, umfassen.

5. Elektrodenanordnung nach Anspruch 1, wobei:
die Keramikpartikel mindestens eines, ausgewählt aus der Gruppe, bestehend aus Böhmit, Aluminiumoxid, Titanoxid, Eisenoxid, Siliciumoxid, Zirconiumoxid, Cobaltoxid, Zinnoxid, Nickeloxid, Zinkoxid, Vanadiumoxid und Manganoxid, umfassen.

6. Lithiumsekundärbatterie, umfassend: ein Batteriegehäuse, einen flammhemmenden Elektrolyten, der ein flammhemmendes Lösungsmittel mit einem Flammpunkt von 100 °C oder mehr oder ohne Flammpunkt und ein Lithiumsalz enthält, und die Elektrodenanordnung nach Anspruch 1, wobei der Flammpunkt unter Verwendung entweder eines geschlossenen Testers oder eines offenen Testers gemäß den Standardverfahren von ASTM D93 oder ASTM D1310 gemessen wird.

7. Lithiumsekundärbatterie nach Anspruch 6, wobei das flammhemmende Lösungsmittel mindestens ein organisches Lösungsmittel, ausgewählt aus der Gruppe, bestehend aus einer Verbindung auf Sulfonbasis, einer Verbindung auf Nitrilbasis, einer Verbindung auf Phosphorsäurebasis und einer Verbindung auf Basis von fluorsubstituiertem Carbonat, umfasst.

## Revendications

1. Ensemble électrode comprenant :
un collecteur de courant d'électrode positive ;
une couche de matériau actif d'électrode positive agencée sur le collecteur de courant d'électrode positive ;
une couche de revêtement revêtue sur la couche de matériau actif d'électrode positive ;
une couche mélangée dans laquelle la couche de matériau actif d'électrode positive et la couche de revêtement sont mélangées ; et
une électrode négative agencée sur la couche de revêtement et incluant un collecteur de courant d'électrode négative et une couche de matériau actif d'électrode négative,
dans lequel la couche de revêtement et la couche mélangée comprennent un liant polymère et des particules de polymère ou des particules de céramique ayant une valeur absolue de potentiel zêta égale ou supérieure à 25 mV dispersées sur le liant polymère, et l'épaisseur de la couche mélangée est inférieure à 15 *µ*m, dans lequel le potentiel zêta est mesuré par un procédé de diffusion électrophorétique de la lumière en utilisant un dispositif de diffusion dynamique de la lumière, décrit dans la spécification.

2. Ensemble électrode selon la revendication 1, dans lequel
l'épaisseur de la couche mélangée est 0,1 *µ*m à 14 *µ*m, et le total des épaisseurs de la couche mélangée et de la couche de revêtement est 5 *µ*m à 50 *µ*m.

3. Ensemble électrode selon la revendication 1, dans lequel :
la couche de revêtement et la couche mélangée comprennent le liant polymère et les particules de polymère ou les particules de céramique dans un rapport en poids de 5:95 à 40:60.

4. Ensemble électrode selon la revendication 1, dans lequel :
les particules de polymère comprennent un ou plusieurs éléments sélectionnés dans le groupe constitué de polyméthyl(méth)acrylate, polystyrène, chlorure de polyvinyle, polycarbonate, polysulfone, polyéthersulfone, polyétherimide, polyphénylsulfone, polyamideimide, polyimide, polybenzimidazole, polyéther cétone, polyphtalamide, téréphtalate de polybutylène, téréphtalate de polyéthylène et sulfure de polyphénylène,

5. Ensemble électrode selon la revendication 1, dans lequel :
les particules de céramique comprennent un ou plusieurs éléments sélectionnés dans le groupe constitué de boehmite, oxyde d'aluminium, oxyde de titane, oxyde de fer, oxyde de silicium, oxyde de zirconium, oxyde de cobalt, oxyde d'étain, oxyde de nickel, oxyde de zinc, oxyde de vanadium et oxyde de manganèse.

6. Batterie rechargeable au lithium comprenant : un boîtier de batterie, un électrolyte ignifuge contenant un solvant ignifuge ayant un point d'éclair égal ou supérieur à 100°C ou n'ayant pas de point d'éclair, et un sel de lithium, et l'ensemble électrode défini dans la revendication 1, dans lequel le point d'éclair est mesuré en utilisant soit un vase clos, soit un vase ouvert selon les méthodes des normes ASTM D93 ou ASTM D1310.

7. Batterie rechargeable au lithium selon la revendication 6, dans lequel le solvant ignifuge comprend un ou plusieurs solvants organiques sélectionnés dans le groupe constitué d'un composé à base de sulfone, un composé à base de nitrile, un composé à base d'acide phosphorique et un composé à base de carbonate substitué par du fluor.
